# EUROPÄISCHE PATENTSCHRIFT

(11) **EP 3 050 416 B1**
(45) Veröffentlichungstag und Bekanntmachung des Hinweises auf die Patenterteilung: **27.11.2019**
(21) Anmeldenummer: 16152900.3
(22) Anmeldetag: 27.01.2016
(51) Int. Cl.: A01B 63/112, A01B 63/111

(54) **BODENBEARBEITUNGSGERÄT**
SOIL CULTIVATION DEVICE
APPAREIL DE TRAVAIL DU SOL

(30) Priorität: 27.01.2015 DE 102015000984
(43) Veröffentlichungstag der Anmeldung: 03.08.2016
(73) Patentinhaber: PÖTTINGER Landtechnik GmbH, 4710 Grieskirchen (AT)
(72) Erfinder: Baldinger, Markus, 4084 St. Agatha (AT); Baldinger, Martin, 4722 Peuerbach (AT); Baldinger, Friedrich, 4600 Wels (AT); Bumberger, Rainer, 4141 Pfarrkirchen (AT)
(74) Vertreter: Thoma, Michael

(56) Entgegenhaltungen:
- EP-B1- 1 169 902
- US-A- 6 119 786
- US-A1- 2010 300 711

## Beschreibung

Die vorliegende Erfindung betrifft ein Bodenbearbeitungsgerät, insbesondere Pflug, mit einer Anbauvorrichtung zum Anbau an Unterlenker eines Schleppers sowie einem Fahrwerk zum Abstützen des Bodenbearbeitungsgeräts am Boden, wobei eine Arbeitstiefe des Bodenbearbeitungsgeräts durch Fahrwerkhöhenverstellmittel zum Höhenverstellen des Fahrwerks und Unterlenkerhöhenverstellmittel zum Höhenverstellen der Unterlenker einstellbar ist.

Derartige Bodenbearbeitungsgeräte können beispielsweise als Aufsattelpflug oder als Anbaupflug, aber auch als Scheibenegge oder Grubber ausgebildet sein und werden üblicherweise mittels einer Deichsel oder einem Anbaubock, an dem eine Dreipunktanlenkung befestigbar ist, an einen Schlepper angebaut, der das Bodenbearbeitungsgerät üblicherweise hinter sich herzieht oder bei bestimmten Ausbildungsformen auch vor oder neben sich herschieben kann.

Um höhere Flächenleistungen zu erzielen, werden in jüngerer Zeit dabei immer größere Arbeitsbreiten, beispielsweise durch vielscharige Ausbildung der Pflugscharreihen, verwendet, wofür jedoch immer größere und stärkere Schlepper benötigt werden, um die notwendige Zug- und Antriebskraft bereitstellen zu können. Auf schwierigen, insbesondere feuchten und traktionsreduzierenden Böden stoßen jedoch auch größere Schlepper an ihre Grenzen, da auch bei Allradantrieb des Schleppers dessen Antriebskraft nicht mehr auf den Boden gebracht werden kann und der Radschlupf am Schlepper zu groß wird. Diese Problematik wird bei Pflügen noch dadurch verschärft, dass Pflüge dazu neigen, im Arbeitsbetrieb nicht einfach geradeaus zu laufen, sondern einen recht hohen Querzug auf den Schlepper ausüben, der durch Gegenlenken am Schlepper kompensiert werden muss. Hierdurch kommt es zu einer weiteren Vergrößerung des Radschlupfs am Schlepper, da der Schlepper bei an sich gerader Fahrgasse mit eingelenkten Rädern gefahren wird, wodurch die Schlepperräder auch noch quer zur eigentlich geraden Fahrtrichtung radieren.

Bisweilen wurde versucht, solchen Traktionsproblemen beispielsweise beim Überfahren von besonders feuchten Bodenabschnitten dadurch zu begegnen, dass vorübergehend die Arbeitstiefe reduziert wird. Dies ist bei Bodenbearbeitungsgeräten der genannten Art jedoch nicht ganz einfach, da die Arbeitstiefe sowohl von der Höhenstellung der Unterlenker des Schleppers als auch von der Höhenstellung des Fahrwerks des Bodenbearbeitungsgeräts abhängt. Werden beispielsweise nur die Unterlenker des Schleppers angehoben, kann es je nach Fahrwerksanordnung beispielsweise bei sehr langen Pflugscharreihen dazu kommen, dass zwar die vordersten Pflugschare ein Stück weit angehoben werden, die in Fahrtrichtung hinter dem Fahrwerk liegenden Pflugschare jedoch sogar noch tiefer in den Boden geraten. Der Pflug verkippt sozusagen um das Fahrwerks- bzw. Pflugrad, wenn die Unterlenker höhenverstellt werden.

Um die Traktionsprobleme am Schlepper zu reduzieren, wurde auch bereits vorgeschlagen, das Pflugrad, mittels dessen der Pflug am Boden abgestützt wird, ebenfalls anzutreiben. Solche Pflüge mit angetriebenen Pflugrädern zeigen beispielsweise die Schriften AT 301230 B, DE 19628031 A1 und DE 69217278 T2.

Die Steuerung der Radantriebe berücksichtigt dabei zumeist den Arbeits- und Nichtarbeitsbetrieb, wobei der Pflugradantrieb zugeschaltet wird, wenn der Pflug in Arbeitsstellung und der Radantrieb abgeschaltet wird, wenn der Pflug in Transport- oder Vorgewendestellung ist. Im Pflugbetrieb wird dabei die Radgeschwindigkeit des Pflugrads konstant gehalten oder an die Drehzahl der Schlepperzapfwelle angepasst, vgl. AT 301230 B. Dabei können im Pflugbetrieb mehrere Pflugräder eines Pflugs drehzahlsynchron angetrieben werden beziehungsweise Drehzahldifferenzen zwischen den Pflugrädern mit einer Differenzialsperre gesperrt werden, um den Radschlupf zu begrenzen, vgl. DE 69217278 T2.

Aus der EP 2502477 A1 ist ferner ein Bodenbearbeitungsgerät in Form einer Scheibenegge beziehungsweise eines Grubbers mit einer antreibbaren Nachlaufwalze bekannt, wobei für- den Antrieb der Nachlaufwalze der Schlepperradschlupf, die Hangneigung sowie die Arbeitstiefe berücksichtigt werden.

Ein gattungsgemäßes Bodenbearbeitungsgerät zeigt die Schrift EP 1 169 902 B1, bei der aus dem Drehmoment des Schleppermotors unter Berücksichtigung kalibrierter Rollwiderstands- und Fahrverlustdaten ein Zugkraftsignal bestimmt wird, in Abhängigkeit dessen die Arbeitstiefe des Pflugs gesteuert wird. Die US 2010/0300711 A1 zeigt ferner die Steuerung eines Pflugs in Abhängigkeit vom Radschlupf am Schlepper, wobei bei Überschreiten einer ersten Radschlupfschwelle der Oberlenker verkürzt wird, um mehr Pfluggewicht auf die Schlepperräder zu geben, und bei Überschreiten einer zweiten Radschlupfschwelle die Unterlenker angehoben werden, um die Arbeitstiefe des Pflugs zu vermindern. Die Schrift US 6,119,786 schlägt es vor, bei einem Pflug über die Kraft im Oberlenker das Lastmoment auf den Schlepper zu berechnen, um die am Pflug wirkenden Kräfte gleichmäßig halten zu können.

Zusätzlich zu den genannten Traktionsproblemen ist bisweilen auch speziell der Vorgewendeanschnitt bei Bodenbearbeitungsgeräten der genannten Art schwierig zu bewerkstelligen, insbesondere wenn diese als Pflug mit einer längeren Pflugscharreihe ausgebildet sind. Einerseits benötigt der Pflug nach dem Vorgewende beim Absenken eine längere Fahrstrecke, bis die gewünschte Arbeitstiefe wieder vollständig erreicht ist, so dass ein größerer Bodenbereich am Vorgewenderand nur mit einer unzureichenden Arbeitstiefe gepflügt ist. Diese Problematik ergibt sich hierbei nicht nur beim Anschneiden einer neuen Fahrgasse nach dem Vorgewende, sondern auch beim Ausheben des Pflugs am Ende einer Fahrgasse vor dem Vorgewende, da der Pflug eine gewisse Fahrstrecke benötigt, um die Pflugschare aus dem Boden heben zu können. Zum anderen können sich auch speziell am Vorgewende Traktionsprobleme ergeben, da hier die Fahrgeschwindigkeit deutlich niedriger ist und es zu Anfahrproblemen kommen kann.

Der vorliegenden Erfindung liegt die Aufgabe zugrunde, ein verbessertes Bodenbearbeitungsgerät der genannten Art zu schaffen, das Nachteile des Standes der Technik vermeidet und letzteren in vorteilhafter Weise weiterbildet. Insbesondere soll eine verbesserte Gerätesteuerung geschaffen werden, mit Hilfe derer das Bodenbearbeitungsgerät mit kleineren und leichteren Schleppern gefahren werden kann, übermäßiger Schlupf reduziert wird und der Vorgewendeanschnitt verbessert wird.

Erfindungsgemäß wird die genannte Aufgabe durch ein Bodenbearbeitungsgerät gemäß Anspruch 1 gelöst. Bevorzugte Ausgestaltungen der Erfindung sind Gegenstand der abhängigen Ansprüche.

Es wird also vorgeschlagen, die Höhenverstellung der Unterlenker des Schleppers und des Fahrwerks des Bodenbearbeitungsgeräts miteinander koordiniert auszuführen und aufeinander abzustimmen, um eine jeweils gewünschte Arbeitstiefeneinstellung zu erreichen. Hierzu werden die Fahrwerkshöhenverstellmittel und die Unterlenkerhöhenverstellmittel von einer Tiefensteuervorrichtung automatisch aufeinander abgestimmt gesteuert.

Gemäß einem Aspekt der Erfindung ist eine Tiefensteuervorrichtung zum automatischen Ansteuern der Fahrwerks- und Unterlenkerhöhenverstellmittel in Abhängigkeit eines Radschlupfs und/oder einer vom Schlepper auf das Bodenbearbeitungsgerät ausgeübten Zugkraft vorgesehen und derart ausgebildet, dass bei Überschreiten eines Schwellenwerts für den Radschlupf und/oder für die Zugkraft die Arbeitstiefe durch gemeinsames Verstellen des Fahrwerks und der Unterlenker gleichmäßig für Front- und Heckabschnitte des Bodenbearbeitungsgeräts verringert wird. Durch eine solche aufeinander abgestimmte Höhenverstellung des Anbaugerätefahrwerks und der Unterlenker des Schleppers kann die Arbeitstiefe auch bei größeren, längeren Werkzeügreihen gleichmäßig verstellt werden, ohne dass es durch Kippeffekte über das Fahrwerk zu ungewollten Tiefenverstellungen kommt, so dass feinfühlig auf Schlupfprobleme oder übermäßige Zugkräfte reagiert werden kann.

In Weiterbildung der Erfindung kann die genannte Tiefensteuervorrichtung dabei einen Schlepperradschlupf berücksichtigen, der an einem oder mehreren Schlepperrädern auftritt. Der Schlepperradschlupf kann hierbei durch Vergleich der Raddrehzahlen mehrerer Schlepperräder und/oder einen Abgleich der jeweiligen Schlepperradzahl gegenüber einem Bodenfahrgeschwindigkeitssignal, das die Fahrgeschwindigkeit über Grund wiedergibt, bestimmt werden. Die Fahrgeschwindigkeit über Grund kann beispielsweise durch ein unangetriebenes Rad oder andere Fahrgeschwindigkeitssensoren wie GPS-Sensoren, Radarsensoren oder auch ein unangetriebenes Rad des Anbaugeräts bestimmt werden. Hierbei kann beispielsweise ein Fahrgeschwindigkeitssignal, das vom Schlepper bereitgestellt wird, verwendet werden. Alternativ oder zusätzlich kann auch am Bodenbearbeitungsgerät ein eigener Fahrgeschwindigkeitssensor vorgesehen sein, beispielsweise in Form eines Radarsensors für die Fahrgeschwindigkeit über Grund, die der tatsächlichen Fahrgeschwindigkeit entspricht. Wird festgestellt, dass die Radumfangsgeschwindigkeit die tatsächliche Fahrgeschwindigkeit überschreitet, insbesondere um ein vorbestimmtes Maß überschreitet, kann die Arbeitstiefe und damit der Fahrwiderstand des Bodenbearbeitungsgeräts reduziert werden.

Alternativ oder zusätzlich zu dem genannten Schlepperradschlupf kann die Tiefensteuervorrichtung auch einen Anbaugeräteradschlupf berücksichtigen, wenn das Bodenbearbeitungsgerät selbst ein angetriebenes Rad besitzt. Dies kann beispielsweise ein angetriebenes Pflugrad sein, wenn das Bodenbearbeitungsgerät als Pflug ausgebildet ist, oder allgemein ein Anbaugeräterad sein, mit dem sich das Bodenbearbeitungsgerät unabhängig oder zusätzlich zum Schlepper am Boden abstützt.

Übersteigt der Schlepperradschlupf und/oder der Anbaugeräteradschlupf einen jeweiligen Schwellenwert - wobei für den Schlepperradschlupf und den Anbaugeräteradschlupf verschiedene, voneinander abweichende Schwellenwerte oder auch ein gemeinsamer Schwellenwert vorgesehen sein kann -, steuert die genannte Tiefensteuervorrichtung die Fahrwerks- und Unterlenkerhöhenverstellmittel an, um die Arbeitstiefe zu reduzieren.

Die Arbeitstiefe kann hierbei stufenweise oder kontinuierlich so lange verstellt werden, bis der Schlepperradschlupf und/oder der Anbaugeräteradschlupf wieder unter einen vorbestimmten Schwellenwert fällt, wobei der genannte Schwellenwert abweichen kann von dem zuvor genannten Schwellenwert, bei dessen Überschreiten die Arbeitstiefe reduziert wird. Solche abweichenden Schwellenwerte für die Verringerung der Arbeitstiefe einerseits und die Wiedervergrößerung der Arbeitstiefe andererseits können Regelungsprobleme vermeiden und insbesondere verhindern, dass die Arbeitstiefe ständig hin und her gestellt wird. Insbesondere kann ein Schwellenwert, bei dessen Unterschreiten die Arbeitstiefe wieder vergrößert wird, kleiner sein als der Schwellenwert, bei dem die Arbeitsgröße verringert wird.

Alternativ oder zusätzlich zum Radschlupf kann die Tiefensteuervorrichtung auch eine Zugkraft, die der Schlepper auf das Bodenbearbeitungsgerät ausübt, beim Einstellen der Arbeitstiefe berücksichtigen. Die Zugkraft kann hierbei mittels einer geeigneten Zugkraftsensorik die auf das Bodenbearbeitungsgerät oder an der Anbauvorrichtung tatsächlich wirkende Zugkraft direkt oder indirekt gemessen werden, wobei die Zugkraftsensorik hier vorzugsweise die horizontalen Zugkräfte in Fahrtrichtung misst, die in der Anbauvorrichtung des Pflugs und/oder in der damit zusammenwirkenden Anbauvorrichtung des Schleppers wirken. Je nach Ausbildung der Anbauvorrichtung können dies beispielsweise Kräfte in Lenkern des geräteseitigen Anbaubocks und/oder Kräfte in Lenkern der schlepperseitigen Anbauvorrichtung, beispielsweise Unterlenkerzugkräfte sein. Je nachdem, ob der Schlepper das Bodenbearbeitungsgerät tatsächlich in an sich üblicher Weise zieht oder in umgekehrter Konstellation schiebt, können die Zugkräfte auch Druck- bzw. Schubkräfte sein. Der Begriff Zugkraft ist daher auch für eine Schubkraft zu verstehen.

Das von der Zugkraftsensorik bereitgestellte Zugkraftsignal wird auf einen Zugkraft-Signaleingang der Tiefensteuervorrichtung gegeben.

Die genannte Zugkraftsensorik kann hierzu den Unterlenkern der schlepperseitigen und/oder pflugseitigen Anbauvorrichtung zugeordnete Kraftsensorelemente umfassen, die Zug- und/oder Druckkräfte in den genannten Unterlenkern erfassen.

In Abhängigkeit der Zugkraft bzw. des bereitgestellten Zugkraftsignals kann die Tiefensteuervorrichtung die Fahrwerkshöhenverstellmittel und die Unterlenkerhöhenverstellmittel automatisch aufeinander abgestimmt ansteuern, insbesondere bei Erreichen eines Schwellenwerts für die Zugkraft die Arbeitstiefe reduzieren. Ähnlich der zuvor genannten Steuerung in Abhängigkeit des Radschlupfs kann hierbei die Arbeitstiefe stufenweise oder kontinuierlich so lange reduziert werden, bis die Zugkraft wieder unter einen vorbestimmten Schwellenwert fällt, wobei auch hier dieser Schwellenwert, bei dessen Unterschreiten die Arbeitstiefe wieder vergrößert wird, von dem Schwellenwert, bei dessen Überschreiten die Arbeitstiefe reduziert wird, abweichen kann und insbesondere kleiner sein kann als der letztgenannte Schwellenwert, um ein ständiges Hin- und Herstellen zu vermeiden. Wie bei der Radschlupfsteuerung können jedoch auch bei der Zugkraftsteuerung identische Schwellenwerte für das Vergrößern und das Verringern der Arbeitstiefe verwendet werden.

Die Tiefensteuervorrichtung kann die genannte Radschlupfsteuerung und die genannte Zugkraftsteuerung parallel asführen, insbesondere derart, dass sowohl der Radschlupf als auch die Zugkraft überwacht werden, wobei sowohl bei Erreichen eines Radschlupfschwellenwerts als auch bei Erreichen eines Zugkraftschwellenwerts die Arbeitstiefe in der beschriebenen Weise reduziert wird. Hierdurch kann weder übermäßiger Radschlupf noch übermäßige Zugkräfte - was beispielsweise bei sehr hohe Traktion gebenden Böden denkbar ist - eintreten. In vielen Fällen wird es jedoch ausreichen, wenn die Tiefensteuervorrichtung nur eine der beiden Radschlupf- und Zugkraftsteuerungen ausführt, beispielsweise die Zugkraftsteuerung, da hierdurch in vielen Fällen auch übermäßiger Radschlupf begrenzt werden kann.

In Weiterbildung der Erfindung kann die Tiefensteuervorrichtung die Unterlenkerhöhenverstellmittel und die Fahrwerkhöhenverstellmittel synchron verfahren, d.h. derart ansteuern, dass die Unterlenker und das Fahrwerk synchron miteinander höhenverstellt werden und das Bodenbearbeitungsgerät parallel zum Boden bzw. in fester Ausrichtung zum Boden bleibend angehoben und/oder abgesenkt werden kann. Insbesondere können durch ein solches synchrones Verstellen der Unterlenker und des Fahrwerks frontseitige und heckseitige Bereiche des Bodenbearbeitungsgeräts, insbesondere weiter vorne laufende Arbeitswerkzeuge und weiter hinter laufende Werkzeuge, gleichzeitig und um jeweils gleiche Beträge angehoben werden, so dass sich die Arbeitstiefe an allen Bodenbearbeitungswerkzeugen gleichmäßig verändert.

Alternativ zu einem solchen synchronen Verstellen kann die Tiefensteuervorrichtung jedoch auch gezielt ein nicht synchrones Höhenverstellen der Unterlenker und des Fahrwerks vorsehen, um gezielt einen frontseitigen Geräteabschnitt des Bodenbearbeitungsgeräts abweichend von einem heckseitigen Bodenbearbeitungsgeräteabschnitt zu verstellen. Insbesondere im Bereich des Vorgewendes kann es hilfreich sein, die Unterlenker und das Anbaugerätefahrwerk zeitlich zueinander versetzt höhenzuverstellen, um den Vorgewendeanschnitt zu verkleinern. Wird beispielsweise nach dem Vorgewende das Bodenbearbeitungsgerät aus der angehobenen Vorgewendestellung wieder in die Arbeitsstellung abgesenkt, kann die für das Eintauchen in den Boden benötigte Fahrtstrecke dadurch reduziert werden, dass mit dem Absenken der Unterlenker zuerst begonnen wird und das Fahrwerk erst später entsprechend höhenverstellt wird, um zuerst eine Absenkung der frontseitigen Arbeitswerkzeuge und sodann eine Absenkung der heckseitigen Arbeitswerkzeuge zu erzielen.

Die Tiefensteuervorrichtung umfasst hierzu gemäß der vorliegenden Erfindung Anschnittsteuermittel, die die Unterlenker- und Fahrwerkshöhenverstellmittel derart ansteuern, dass ein Hubvorgang der Unterlenker zeitversetzt zu einem Hubvorgang am Fahrwerk ausgeführt wird.

Die genannten Anschnittsteuermittel können dabei beim Absenken des Bodenbearbeitungsgeräts nach dem Vorgewende in die bestimmungsgemäße Arbeitsstellung den Absenkvorgang an den Unterlenkern vor dem Absenkvorgang am Fahrwerk beginnen und/oder umgekehrt beim Erreichen des Vorgewendes beim Ausheben des Bodenbearbeitungsgeräts aus der bestimmungsgemäßen Arbeitsstellung in die Vorgewendestellung das Anheben an den Unterlenkern vor dem Anheben am Fahrwerk beginnen.

Das zeitversetzte Ausführen der Hubvorgänge bzw. Absenkvorgänge an den Unterlenkern und am Fahrwerk kann hierbei grundsätzlich in verschiedener Art und Weise gesteuert werden, beispielsweise durch einen fest vorgegebenen Zeitversatz. Hierzu können die genannten Anschnittsteuermittel beispielsweise ein Zeitsteuerglied besitzen, durch welches beispielsweise der Hubvorgang am Fahrwerk einige Sekunden nach Beginn des Hubvorgangs an den Unterlenkern begonnen wird.

Alternativ zu einem solchen festen Zeitversatz können die Anschnittsteuermittel beim Ansteuern der Unterlenker- und Fahrwerkshöhenverstellmittel jedoch auch andere Betriebsparameter des Schleppers und/oder des Bodenbearbeitungsgerätes berücksichtigen.

Insbesondere kann eine beim Hubvorgang zurückgelegte Fahrtstrecke berücksichtigt werden, beispielsweise dergestalt, dass nach Auslösen des Hubvorgangs der Unterlenker die vom Schlepper und/oder Bodenbearbeitungsgerät zurückgelegte Fahrtstrecke ermittelt und der Hubvorgang am Fahrwerk in Abhängigkeit der zurückgelegten Wegstrecke gesteuert wird. Erfindungsgemäß wird das Absenken am Fahrwerk nach dem Vorgewende derart gesteuert, dass die heckseitigen Arbeitswerkzeuge - nach Zurücklegen einer entsprechenden Fahrtstrecke - im Wesentlichen genau dort in den Boden stechen, wo auch die frontseitigen Bodenbearbeitungswerkzeuge in den Boden gestochen haben. Das Absenken am Fahrwerk kann wegstreckenabhängig so gesteuert sein, dass das Absenken der heckseitigen Arbeitswerkzeuge dort beginnt, wo auch mit dem Absenken der frontseitigen Arbeitswerkzeuge begonnen wurde.

Umgekehrt kann beim Erreichen des Vorgewendes, also beim Ausheben des Bodenbearbeitungsgeräts aus der Arbeitsstellung in die Vorgewendestellung mit dem Ausheben am Fahrwerk wegstreckenabhängig dort begonnen werden, wo mit dem Ausheben am Unterlenker begonnen wurde.

Die genannten Anschnittsteuermittel können hierbei vollautomatisch oder halbautomatisch arbeiten. Beispielsweise können die Anschnittsteuermittel das genannte, zueinander versetzte Ausführen der Hubvorgänge automatisch dann beginnen, wenn ein Schlepperführer ein entsprechendes Startsignal gibt, beispielsweise durch Betätigen eines Vorgewendebetätigers "Anheben Vorgewende" oder "Absenken Vorgewende". Alternativ oder zusätzlich können die Anschnittsteuermittel auch einen vollautomatischen Betriebsmodus aufweisen, in dem die zueinander versetzten Hubvorgänge am Vorgewende durch ein automatisch generiertes Vorgewendesignal ausgelöst werden können. Ein solches automatisch generiertes Vorgewendesignal kann beispielsweise von einem Navigationsgerät, beispielsweise auf GPS-Basis und/oder einen Feldscanner oder Geländeradar enthaltend, gegeben werden, und/oder die Fahrgeschwindigkeit berücksichtigen, beispielsweise dergestalt, dass bei Annäherung an ein Feldende ein Absenken der Fahrgeschwindigkeit unter ein vorbestimmtes Niveau zum Anlass für das Beginnen des Aushubvorgangs oder umgekehrt ein Beschleunigen aus dem Stand über eine vorbestimmte Geschwindigkeit hinaus vom Feldrand her beginnend zum Anlass für das Starten des Absenkvorgangs genommen wird.

Die Tiefensteuervorrichtung kann grundsätzlich von der Steuervorrichtung des Schleppers gebildet sein und ggf. unter Zwischenschaltung des Jobrechners des Bodenbearbeitungsgeräts die Höhenverstellmittel des Fahrwerks des Bodenbearbeitungsgeräts entsprechend ansteuern, so dass sowohl die Unterlenker als auch das Fahrwerk vom Schleppersteuergerät her höhenverstellt werden.

In alternativer Weiterbildung der Erfindung kann die genannte Tiefensteuervorrichtung und/oder auch die zuvor genannten Anschnittsteuermittel jedoch vom Jobrechner oder allgemein der anbaugeräteseitigen Steuervorrichtung des Anbaugeräts gebildet sein bzw. darin implementiert sein. Bei dieser Ausführung hat der Jobrechner des Anbaugeräts Zugriff auf die Unterlenkerhöhenverstellmittel am Schlepper. Eine solche Implementierung der Tiefensteuervorrichtung und/oder der Anschnittsteuermittel in der Steuervorrichtung des Anbaugeräts besitzt den Vorteil, dass Kompatibilitätsprobleme zwischen Schlepper und Anbaugerät leichter vermieden werden können, da schlepperseitig üblicherweise ein die Stellung der Unterlenker angebendes Höhensignal bereitgestellt wird.

Insbesondere kann in Weiterbildung der Erfindung zwischen dem Jobrechner des Bodenbearbeitungsgeräts und dem Schlepper eine BUS-Verbindung, insbesondere eine ISOBUS-Verbindung vorgesehen sein, über die einerseits ein am Schlepper generiertes Radschlupfsignal und/oder ein am Schlepper generiertes Zugkraftsignal an den Jobrechner des Anbaugeräts bereitstellbar und/oder andererseits vom Jobrechner des Bodenbearbeitungsgeräts ein Steuersignal zum Steuern der Unterlenkerhöhenverstellmittel an die Unterlenkerhöhenverstellmittel des Schleppers bereitstellbar ist.

Zusätzlich zu der zuvor genannten Verstellung der Arbeitstiefe durch die Unterlenker- und Fahrwerkshöhenverstellmittel können weitere Steuerungsmaßnahmen zur Vermeidung und/oder Reduzierung und/oder Begrenzung des Radschlupfs und/oder der vom Schlepper aufzubringenden Zugkraft ergriffen werden. Insbesondere können hierzu eine Gewichtsverteilung zwischen Schlepper und Bodenbearbeitungsgerät und/oder eine Drehmomentverteilung zwischen Schlepperrädern und angetriebenem Anbaugeräterad gesteuert und/oder verändert werden.

Zum Steuern der Gewichtsverteilung kann hierbei eine Vorspannvorrichtung zur Gewichtsentlastung oder -belastung des Bodenbearbeitungsgeräts und Gewichtsbelastung oder -entlastung der Hinterräder des Schleppers vorgesehen werden, mittels derer ein Anbaugeräterahmen gegenüber dem Schlepper um eine liegende Querachse mit einem Vorspann-Drehmoment beaufschlagbar ist. Die Vorspannvorrichtung kann dabei in die Anlenkung des Anbaugeräterahmens am Anbaubock integriert sein, oder es kann ein beispielsweise hydraulisch vorspannbarer Oberlenker und/oder vorspannbare Unterlanker vorgesehen sein, wobei eine Drucksteuerung vom Schlepper oder vom Anbaugerät her möglich ist. Vorteilhafterweise wird dabei die liegende Querachse, um die der Anbaugeräterahmen gegenüber dem Schlepper Wippbewegungen ausführen kann, rotatorisch vorgespannt, so dass ein Teil des Anbaugerätegewichts auf die Hinterräder des Schleppers übertragen oder umgekehrt ein Teildes Schleppergewichts auf das Anbaugerätefahrwerk übertragen wird. Hierdurch kann die Gewichtsverteilung zwischen Schlepper- und Anbaugerätefahrwerk verändert und dementsprechend Radschlupf am Schlepper und/oder am Bodenbearbeitungsgerät gesteuert bzw. begrenzt werden.

Die Vorspannvorrichtung zur elastischen Vorspannung des Bodenbearbeitungsgeräterahmens gegenüber dem Schlepper um die genannte liegende Querachse kann dabei hinsichtlich ihrer Vorspannkraft bzw. Ihres Vorspannmoments einstellbar ausgebildet sein und durch eine Steuervorrichtung in Abhängigkeit auftretenden Radschlupfs gesteuert werden.

Eine solche Steuerung des Vorspannmoments kann zusätzlich zu den zuvor beschriebenen Maßnahmen der Arbeitstiefensteuerung oder in einem ergänzenden Betriebsmodus auch alternativ hierzu vorgenommen werden.

Durch eine rotatorische Vorspannung der liegenden Querachse zwischen Anbaugeräterahmen und Schlepper kann im Arbeitsbetrieb des Bodenbearbeitungsgeräts eine Gewichtsübertragung vom Bodenbearbeitungsgerät auf die Hinterräder des Schleppers und damit eine Traktionserhöhung am Schlepper bewirkt werden . In umgekehrter Weise kann durch eine rotatorische Vorspannung der liegenden Querachse zwischen Anbaugeräterahmen und Schlepper im Arbeitsbetrieb bei Bedarf auch eine Gewichtsübertragung vom Schlepper auf das Bodenbearbeitungsgerät und damit eine Traktionserhöhung am Schlepper bewirkt werden.

Die Vorspannvorrichtung kann dabei grundsätzlich verschieden ausgebildet und angeordnet sein, beispielsweise kann eine mechanische Feder als Vorspannvorrichtung Verwendung finden. In bevorzugter Weiterbildung der Erfindung jedoch umfasst die Vorspannvorrichtung einen Druckmittelzylinder, der von einer Fluiddruckquelle druckbeaufschlagt und hierdurch vorgespannt ist. Um eine besonders Platz sparende Anordnung zu erreichen, kann der Druckmittelzylinder in einer im Wesentlichen liegenden Ausrichtung und/oder im Wesentlichen parallel zu einer Hauptachse der Deichsel und/oder des vorzugsweise trägerförmigen Anbaugeräterahmens angeordnet sein. Hierbei kann die Deichsel einen buckelförmig vorspringenden Befestigungsabschnitt aufweisen, an dem der Druckmittelzylinder abgestützt ist, so daß sich der Druckmittelzylinder im wesentlichen entlang der Deichsel erstrecken kann. Alternativ kann jedoch auch einfach der Oberlenker der Dreipunktanlenkung als Druckmittelzylinder ausgebildet sein.

Um die Traktionskraft je nach Bodenbeschaffenheit und/oder Bodenbearbeitungsgeräteabstimmung an die Gegebenheiten anpassen zu können, ist in Weiterbildung der Erfindung eine Einstellvorrichtung zur Einstellung der Vorspannkraft vorgesehen, insbesondere in Form einer Hydraulikdruck-Einstellvorrichtung oder eines Hydraulikdruckreglers, mit Hilfe dessen der auf den Vorspannzylinder wirkende Hydraulikdruck gesteuert werden kann. Gemäß einer bevorzugten Ausführung kann die Einstellvorrichtung automatisch arbeitend ausgebildet sein, insbesondere derart, dass sie eine Steuereinrichtung zur Veränderung der Vorspannkraft in Abhängigkeit eines Antriebsradschlupfes des Schleppers und/oder Anbaugeräts und/oder in Abhängigkeit eines den Antriebsradschlupf beeinflussenden Betriebsparameters - beispielsweise der vorgenannten Zugkraft - aufweist.

Alternativ oder zusätzlich zu einer solchen Verstellung der Gewichtsverteilung zwischen Schlepper und Anbaugerät kann auch eine Steuerung oder Regelung des Drehmoments und/oder der Drehzahl eines angetriebenen Anbaugeräterads vorgesehen werden.

Vorteilhafterweise können dabei das Drehmoment und/oder die Drehzahl des angetriebenen Anbaugeräterads so geregelt werden, dass vom Schlepper eine möglichst geringe Zugkraft aufzubringen ist, wodurch der am Schlepper auftretende Schlepperradschlupf minimiert wird. Hierzu ist eine Radantriebs-Steuervorrichtung zum Steuern des Drehmoments und der Drehzahl des Anbaugeräteradantriebs in Abhängigkeit einer vom Schlepper in die Anbauvorrichtung induzierten Zugkraft und/oder eines Radschlupfs des Anbaugeräterads vorgesehen, wobei die Radantriebssteuervorrichtung einen Drehmomentregler zum Regeln des Radantrieb-Drehmoments insbesondere derart, dass die Zugkraft in der Anbauvorrichtung minimal wird, und/oder einen Drehzahlregler zum Regeln der Radantrieb-Drehzahl insbesondere derart, dass der Anbaugeräteradschlupf minimal wird, aufweist. Während der Drehmomentregler also versucht, das Drehmoment am Anbaugeräterad so groß wie möglich beziehungsweise so groß zu fahren, das die vom Schlepper in die Anbauvorrichtung induzierte Zugkraft möglichst klein wird, begrenzt der Drehzahlregler die Drehzahl des Anbaugeräterads, um einen Anbaugeräteradschlupf möglichst zu vermeiden. Durch dieses Zusammenspiel von Drehmoment- und Drehzahlregelung kann das angetriebene Anbaugeräterad den Vortrieb des Bodenbearbeitungsgeräts bestmöglich unterstützen und dadurch die vom Schlepper benötigten Zugkräfte und damit die Neigung des Schleppers zu Schlepperradschlupf minimieren.

Die Drehmomentregelung berücksichtigt dabei die Leistungsgrenzen des Anbaugeräteradantriebs, das heißt sobald der Anbaugeräteradantriebsmotor sein maximales Drehmoment abgibt, kann die vom Schlepper in die Anbauvorrichtung induzierte Zugkraft nicht weiter reduziert werden, da keine weitere Drehmomenterhöhung am Anbaugeräterad möglich ist. Solange jedoch die Drehmomentgrenze des Anbaugeräteradantriebs noch nicht ausgeschöpft ist, wird das Drehmoment so lange erhöht, bis die Zugkraft des Schleppers in der Anbauvorrichtung gegen Null geht. Vorteilhafterweise ist der Drehmomentregler dabei derart ausgebildet, dass er das Drehmoment begrenzt beziehungsweise nicht weiter erhöht, wenn die Zugkraft tatsächlich Null bzw. kleiner als ein vorbestimmter Minimal-Sollwert ist, das heißt es werden keine Schubkräfte am Pflug erzeugt, die sozusagen als negative Zugkraft beziehungsweise Schubkraft auf den Schlepper wirken würden.

Zum anderen wird die Drehzahl des Anbaugeräteradantriebs bei der Regelung des Anbaugeräteradantriebs berücksichtigt. Tritt Anbaugeräteradschlupf auf, wird der Radantrieb hinsichtlich seiner Drehzahl begrenzt und nicht weiter in seiner Leistung hochgefahren, um Anbaugeräteradschlupf weitgehend zu vermeiden.

Ein solcher Anbaugeräteradschlupf kann beispielsweise durch Abgleich der Radumfangsgeschwindigkeit des Anbaugeräterads mit den Umfangsgeschwindigkeiten der Schlepperräder erfolgen. Hierbei kann beispielsweise ein Fahrgeschwindigkeitssignal, das vom Schlepper bereitgestellt wird, verwendet werden. Alternativ oder zusätzlich kann auch am Pflug ein eigener Fahrgeschwindigkeitssensor vorgesehen sein, beispielsweise in Form eines Radarsensors für die Fahrgeschwindigkeit über Grund, die der tatsächlichen Fahrgeschwindigkeit entspricht. Wird festgestellt, dass die Radumfangsgeschwindigkeit die tatsächliche Fahrgeschwindigkeit überschreitet, insbesondere um ein vorbestimmtes Maß überschreitet, kann die Drehzahlbegrenzung am Anbaugeräterad einsetzen.

Der Anbaugeräteradantrieb kann dabei grundsätzlich verschieden ausgebildet sein. Um eine schnell ansprechende, ansteuerungstechnisch einfache Regelbarkeit zu erzielen, kann an dem Pflug zumindest ein Radantrieb mit einem Elektromotor zum Antreiben des zumindest einen Anbaugeräterads vorgesehen. Durch einen Elektromotor kann die Antriebsenergie ohne aufwändigen mechanischen Antriebsstrang, der von der Zapfwelle des Schleppers her angetrieben werden müsste, an das anzutreibende Rad gebracht werden, da lediglich eine Stromleitung vorzusehen ist. Dementsprechend kann für das Anbaugerät insgesamt betrachtet eine kompakte und leichte Bauweise beibehalten werden. Zudem kann ein Elektromotor mit einfachen Mitteln hinsichtlich Drehzahl und Antriebsmoment unabhängig vom Betriebspunkt des Schleppers gesteuert werden.

In Weiterbildung der Erfindung kann der Radantrieb als Einzelradantrieb ausgebildet sein, wobei je nach Ausbildung des Pflugs ggf. mehrere Radelemente mit jeweils einem Einzelradantrieb angetrieben werden können, so dass das Anbaugerät mehrere Einzelradantriebe besitzt. Alternativ ist es jedoch auch möglich, einen gemeinsamen Motor zum Antrieb mehrerer gruppenweise zusammengefasster Radelemente zu verwenden, wobei in diesem Fall vorteilhafterweise von dem gemeinsamen Motor ein verzweigter Antriebsstrang beispielsweise zu den Radelementen rechts und links an einer gemeinsamen Achse vorgesehen sein kann. Bevorzugt ist jedoch ein Einzelradantrieb in der vorgenannten Weise, bei dem jedem Radelement ein separater Einzelradantrieb zugeordnet ist, wobei hier sinnvollerweise als Radelement auch ein Zwillingsrad verstanden werden kann. Radelement meint in diesem Fall dann die an einem Fahrwerkspunkt gemeinsam aufgehängten Räder. Alternativ kann das Anbaugerät jedoch auch nur ein angetriebenes Rad besitzen, dem dann ebenfalls ein elektrischer oder hydraulischer, ggf. auch pneumatischer Motor als Antrieb zugeordnet ist.

Grundsätzlich kann der Motor hierbei in verschiedener Weise mit dem anzutreibenden Radelement gekoppelt sein, wobei beispielsweise ein von dem Rad beabstandet platzierter Motor mittels einer Antriebswelle das Rad antreiben kann. In Weiterbildung der Erfindung jedoch ist der jeweilige Radantrieb als Radnabenantrieb ausgebildet, bei dem der Motor ggf. zusammen mit einer Getriebestufe oder einem Motorgetriebe unmittelbar an der Radnabe sitzend angeordnet ist und vorteilhafterweise in den Radnabenkorpus integriert sein kann. Hierdurch werden entsprechende Antriebsstrangteile und Übertragungselemente wie längere Antriebswellen eingespart, wobei die einfache Energiezufuhr über Elektroleitungen voll zum Tragen kommen.

Je nach Ausbildung des Bodenbearbeitungsgerätss und je nach Betriebssituation kann es vorteilhaft sein, den Anbaugeräteradantrieb hinsichtlich seines Drehmoments und/oder seiner Leistung so zu dimensionieren, dass zumindest ein größerer Teil der Antriebsenergie für das Bodenbearbeitungsgerät durch dessen eigenen Radantrieb aufgebracht werden kann und/oder vom Schlepper her nur der kleinere Teil der Antriebsenergie für den Vorschub des Bodenbearbeitungsgeräts aufgebracht werden muss. Gegebenenfalls kann der Anbaugeräteradantrieb auch vollständig die vom Bodenbearbeitungsgerät benötigte Antriebsenergie aufbringen. Um eine kleine Dimensionierung des Radantriebs am Anbaugerät beibehalten zu können, kann es jedoch vorteilhaft sein, diesen Anbaugeräteradantrieb nur als Zusatzantrieb auszubilden und den größeren Teil der benötigten Zugkraft vom Schlepper her aufzubringen.

Die Erfindung wird nachfolgend anhand eines Ausführungsbeispiels und zugehöriger Zeichnungen näher erläutert. In den Zeichnungen zeigen:

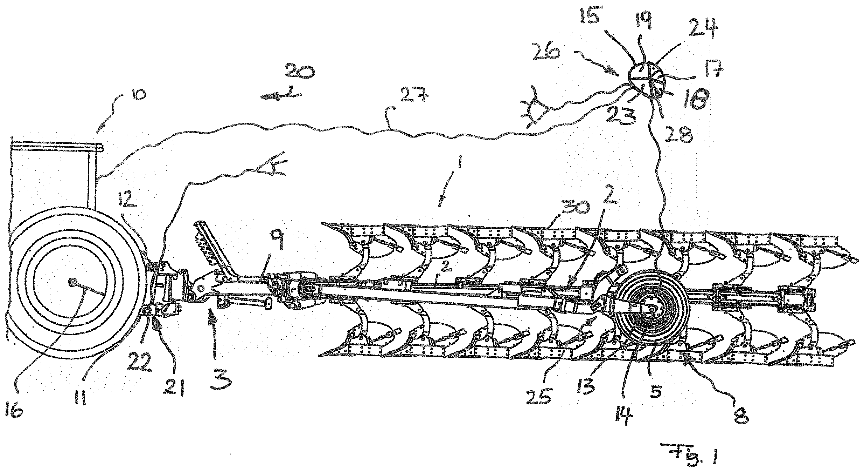

- Fig. 1:: eine schematische Seitenansicht eines Bodenbearbeitungsgeräts in Form eines Pflugs nach einer vorteilhaften Ausführungsform der Erfindung, wobei der Pflug als Wendepflug ausgebildet ist und ein angetriebenes Pflugrad besitzt,
- Fig. 2:: eine schematische Draufsicht auf den Pflug aus Figur 1,
- Fig. 3:: eine schematische Draufsicht auf den Pflug aus den vorhergehenden Figuren in einer vergleichenden Darstellung zur Verdeutlichung der Reduzierung des Vorgewendeanschnitts durch eine versetzte Hubsteuerung an den Unterlenkern und dem Pflugfahrwerk, wobei die Teilansicht (a) die benötigte Vorgewendefläche beim versetzten Eintauchen und die Teilansicht (b) die benötigte Vorgewendefläche beim Paralleleintauchen zeigt, und
- Fig. 4:: eine schematische Seitenansicht der Anbauvorrichtung des Pflugs aus den vorhergehenden Figuren, die eine Vorspannvorrichtung zum Verteilen des Gewichts zwischen Schlepper- und Pflugrädern zeigt.

Der in den Figuren gezeigte Pflug 1 ist als Wendepflug in Form eines Aufsattelpflugs ausgebildet, kann alternativ jedoch auch als Anbaupflug, der gewendet oder nicht gewendet werden kann, ausgebildet sein, wobei grundsätzlich auch ein anderes Bodenbearbeitungsgerät wie beispielsweise eine Scheibenegge oder ein Grubber oder dergleichen vorgesehen sein kann. Der Pflug 1 umfasst dabei einen Pflugrahmen 2, der mittels einer Anbauvorrichtung 3 an einen Schlepper 10 heckseitig angebaut werden kann. Die genannte Anbauvorrichtung 3 kann hierbei grundsätzlich verschieden ausgebildet sein, wobei beispielsweise eine Pflugdeichsel 9 um eine aufrechte Achse schwenkbar an einem Anbaubock angelenkt sein kann, der mittels Unterlenker 11 und Oberlenker 12 am Schlepper 10 befestigt sein kann und den schlepperseitigen Teil der Anbauvorrichtung bilden kann. Alternativ könnte jedoch auch ein Anbaupflug mit einem Anbaubock an den genannten Unter- und Oberlenkern angebaut sein, sodass der Pflug insgesamt ausgehoben werden könnte.

Der in den Figuren gezeigte Pflug 1 umfasst zwei Reihen von Pflugscharen 30, die wechselweise durch Wenden des Pflugs, das heißt Verschwenken des Pflugrahmens 2 mit den daran angebrachten Pflugscharreihen in Einsatz gebracht werden können, um in beiden Fahrtrichtungen entsprechend Pflügen zu können.

Der Pflugrahmen 2 ist durch ein Fahrwerk 8, das ein Pflugrad 4 umfasst, am Boden abgestützt, wobei der Pflugrahmen 2 über das genannte Pflugrad 4 hinweggeschwenkt und dadurch gewendet werden kann. Das Pflugrad 4 ist hierzu mit dem Pflugrahmen 2 über einen Radträger 5 verbunden, wobei der genannte Radträger 5 mit dem Pflugrad 4 um eine liegende, in Fahrtrichtung weisende Schwenkachse 60 verbunden sein kann, um das Wenden des Pflugrahmens 2 zu ermöglichen.

Ferner ist das genannte Pflugrad 4 um eine aufrechte Lenkachse 7 gegenüber dem Radträger 5 lenkbar, wobei zum Einschlagen des Pflugrades 4 um die genannte Lenkachse 7 ein Lenkaktor 6 vorgesehen sein kann, der fremdenergiebetätigt den Lenkwinkel des Pflugrads 4 einstellen kann.

Ferner ist dem Pflugrad 4 ein Radantrieb 13 zugeordnet, um das Pflugrad 4 antreiben zu können. Dieser Radantrieb 13 kann prinzipiell verschieden ausgebildet sein, beispielsweise in Form eines Hydraulikantriebs. Vorteilhafterweise kann jedoch ein Elektroantrieb vorgesehen sein, der direkt dem Pflugrad 4 zugeordnet ist beziehungsweise einen Direktantrieb bildet, der der Radachse des Pflugrads 4 zugeordnet ist. Beispielsweise kann ein Elektromotor 14 des Radantriebs 13 in der Radnabe des Pflugrads 4 angeordnet oder in anderer Weise in das Pflugrad 4 integriert sein, beispielsweise in einem vom Reifen beziehungsweise der Felge des Pflugrads 4 umschlossenen Radinnenraum vorgesehen sein. Die Versorgung des Elektromotors 14 kann vom Schlepper 10 her erfolgen, wobei die Steuerung des Elektromotors 14 von einer Steuervorrichtung 15 bewerkstelligt werden kann, die beispielsweise in Form eines Jobrechners an dem Pflug 1 vorgesehen sein kann.

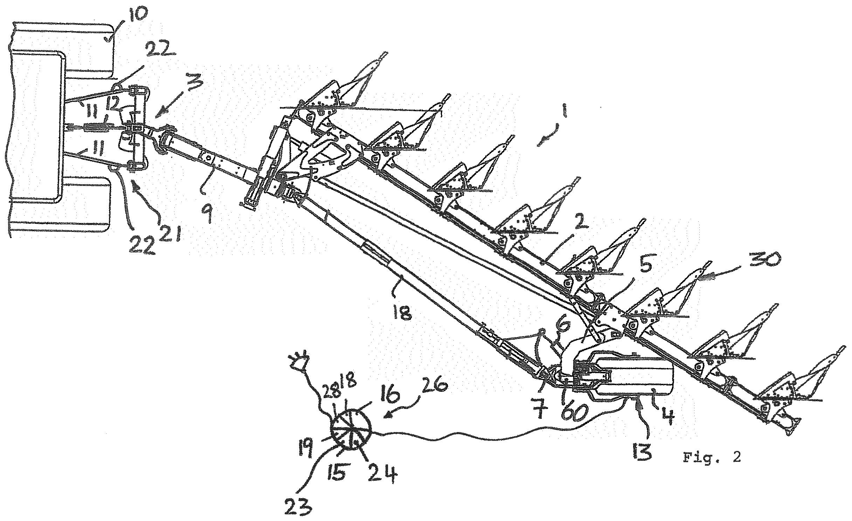

Die genannte Radantriebs-Steuervorrichtung 15 umfasst, wie dies Fig. 2 schematisch zeigt, einen Drehmomentregler 19, der das Drehmoment des Radantriebs 13 derart steuert beziehungsweise regelt, dass die vom Schlepper 10 auf den Pflug 1 gegebene Zugkraft in Fahrtrichtung 20 möglichst gering wird. Umgekehrt ausgedrückt versucht der Drehmomentregler 19 den Pflug 1 immer möglichst stark anzuschieben, sodass vom Schlepper 10 her möglichst wenig Zugkraft benötigt wird. Dabei begrenzt der Drehmomentregler 19 das Drehmoment allerdings dann, wenn die vom Schlepper 10 auf den Pflug 1 gegebene Zugkraft tatsächlich Null wird oder sogar in das Negative geht, das heißt der Drehmomentregler 19 verhindert einen Schubbetrieb, in dem der Schlepper 10 den Pflug 1 bremsen müsste.

Um tatsächlich vom Schlepper 10 auf den Pflug 1 gegebene Zugkraft in Fahrtrichtung 20 überwachen beziehungsweise bestimmen zu können, kann eine Bestimmungseinrichtung 21 zum Bestimmen dieser Zugkraft der Anbauvorrichtung 3 zugeordnet sein. Beispielsweise kann die Bestimmungseinrichtung 21 Kraftsensoren 22 umfassen, die den Unterlenkern 11 und/oder dem Oberlenker 12 zugeordnet sind, wobei die genannten Kraftsensoren 22 beispielsweise auch als Fluiddrucksensoren ausgebildet sein können, wenn die genannten Unter- oder Oberlenker beispielsweise einen Hydraulikzylinder umfassen, um die Lenkerlänge verstellen zu können. Alternativ oder zusätzlich zu solchen den Unterbeziehungsweise Oberlenkern 11 und 12 zugeordneten Kraftsensoren 22 kann jedoch auch ein Kraft-sensor beispielsweise in die Deichsel 9 integriert sein, wobei die Deichsel 9 hier beispielsweise ein Teleskopierstück umfassen kann, in das der Kraftsensor integriert sein kann.

Das Signal der genannten Sensorik beziehungsweise Bestimmungseinrichtung 21, das die Zugkraft des Schleppers 10 auf den Pflug 1 angibt, wird an die genannte Antriebssteuervorrichtung 15 beziehungsweise deren Drehmomentregler 19 gegeben. Der Drehmomentregler 19 steuert sodann in Abhängigkeit des erhaltenen Zugkraftsignals das Drehmoment des Radantriebs 13 derart, dass die gemessene Zugkraft gegen Null geht beziehungsweise möglichst gering wird.

Um Radschlupf am Pflugrad 4 zu vermeiden, umfasst die genannte Antriebssteuervorrichtung 15 ferner einen Drehzahlregler 23, der die Drehzahl des Radantriebs 13 dann begrenzt, wenn eine Schlupfbestimmungseinrichtung 24 einen Pflugradschlupf erfasst. Die genannte Schlupfbestimmungseinrichtung 24 kann beispielsweise einen Geschwindigkeitssensor, beispielsweise in Form eines Radarsensors, zur Bestimmung der Pfluggeschwindigkeit über Grund, also der tatsächlichen Pfluggeschwindigkeit umfassen. Wird anhand der tatsächlichen Drehzahl des Pflugrads 4, die aus einem geeigneten Raddrehzahlsensor erhalten werden kann, festgestellt, dass die Umfangsgeschwindigkeit des Pflugrads 4 größer ist als die tatsächliche Pfluggeschwindigkeit beziehungsweise die tatsächliche Pfluggeschwindigkeit um einen vorgegebenen Schwellenwert überschreitet, dann kann der Drehzahlregler 23 eingreifen und die Raddrehzahl des Pflugrads 4 begrenzen, insbesondere derart, dass die Umfangsgeschwindigkeit des Pflugrads 4 im Wesentlichen der tatsächlichen Pfluggeschwindigkeit entspricht oder beispielsweise einem geringfügig höheren Wert, beispielsweise 110 Prozent der tatsächlichen Pfluggeschwindigkeit. Der genannte Drehzahlregler 23 greift hierzu in die Ansteuerung des Radantriebs 13 ein, beispielsweise durch entsprechendes Ansteuern eines Frequenzumrichters.

Um den Radschlupf am Schlepper 10 und/oder am Pflugrad 4 begrenzen zu können, kann ferner die Arbeitstiefe des Pflugs variiert werden. Hierzu kann einerseits über die Unterlenker 11 des Schleppers 10 die Höhe der Anbauvorrichtung 3 und andererseits über das Fahrwerk 25 die Höhe des Pflugrahmens 2 über dem Pflugrad 4 variiert werden. Hierzu können die entsprechenden Unterlenkerhöhenverstellmittel 16 in an sich bekannter Weise ein hydraulisch oder in anderer Weise arbeitendes Hubwerk am Schlepper umfassen und die Fahrwerkshöhenverstellmittel 17 geeignete Stellmittel zum Höhenverstellen des Pflugrads 4 gegenüber dem Pflugrahmen 2 aufweisen, beispielsweise in Form einer elektromotorisch arbeitenden Stellspindel oder in Form eines Hydraulikzylinders zum Höhenverstellen des Pflugrads 4 gegenüber dem Pflugrahmen 2.

Die genannten Unterlenker- und Fahrwerkshöhenverstellmittel 16 und 17 sind dabei von einer Tiefensteuervorrichtung 18 ansteuerbar, die vorteilhafterweise von dem am Pflug 1 vorgesehenen Jobrechner 26 gebildet sein kann bzw. einen Teil hiervon bilden kann. Der genannte Jobrechner 26 ist hierzu über eine BUS-, insbesondere ISOBUS-Verbindung 27 mit der schlepperseitigen Steuerungseinrichtung verbunden, um auf die Unterlenkerhöhenverstellmittel 16 Zugriff zu haben, d.h. die Unterlenker 11 des Schleppers 10 vom Anbaugerät her steuern zu können. Umgekehrt kann der Jobrechner 26 des Pflugs 1 über die genannte ISOBUS-Verbindung 27 vom Schlepper 10 her Radschlupf- und/oder Zugkraftsignale erhalten. Auch ein Unterlenkerhöhensignal, das die aktuelle Stellung der Unterlenker angibt, kann über den genannten ISOBUS 27 an den Jobrechner 26 übermittelt werden, um die Höhenstellung der Unterlenker 11 regeln bzw. nach Art einer Rückkoppelungssteuerung die Stellbewegung am Fahrwerk 25 auf die Höhenstellung der Unterlenker 11 abstimmen zu können.

Überschreitet der zuvor beschriebene Radschlupf an einem Schlepperrad und/oder am Pflugrad einen vorbestimmten Schwellenwert, kann die Tiefensteuervorrichtung 18 die Arbeitstiefe des Pflugs 1 verringern, indem die Unterlenker 11 angehoben und das Pflugrad 4 gegenüber dem Pflugrahmen 2 abgesenkt bzw. umgekehrt der Pflugrahmen 2 gegenüber dem Pflugrad 4 angehoben wird. Die Hubbewegungen an den Unterlenkern 11 und am Fahrwerk 25 erfolgen hierbei vorteilhafterweise synchron zueinander, so dass die frontseitigen und heckseitigen, d.h. in Fahrtrichtung weiter vorne und weiter hinten liegenden Pflugschare der Pflugscharreihe 30 gleichmäßig angehoben werden, insbesondere synchron zueinander, d.h. gleichzeitig und um gleiche Beträge. Der Pflug 1 wird dabei sozusagen parallel ausgehoben, ohne seine Winkel- oder Kippstellung gegenüber dem Boden zu verändern bzw. um das Pflugrad 4 gegenüber dem Boden zu verkippen.

Die Arbeitstiefe kann dabei so lange verringert werden, bis der Radschlupf und/oder die Zugkraft wieder unter den genannten Schwellenwert oder unter einen anderen Schwellenwert fallen, woraufhin die Arbeitstiefe wieder vergrößert werden kann, bis eine voreingestellte oder gewünschte Arbeitstiefe wieder erreicht ist. Alternativ oder zusätzlich kann die Arbeitstiefe auch als Stellgröße einer Regelung verwendet werden, die als Ziel einen vorbestimmten Radschlupf und/oder eine vorbestimmte Zugkraft anstrebt, beispielsweise die Arbeitstiefe stets so groß wählt, dass gerade noch kein oder ein gerade noch akzeptabler Radschlupf auftritt und/oder eine möglichst große Zugkraft ohne übermäßigen Radschlupf erreicht wird und/oder eine vorbestimmte maximale Zugkraft erreicht wird, die beispielsweise durch ansonsten übermäßigen Verschleiß der Pflugwerkzeuge oder dergleichen definiert sein kann.

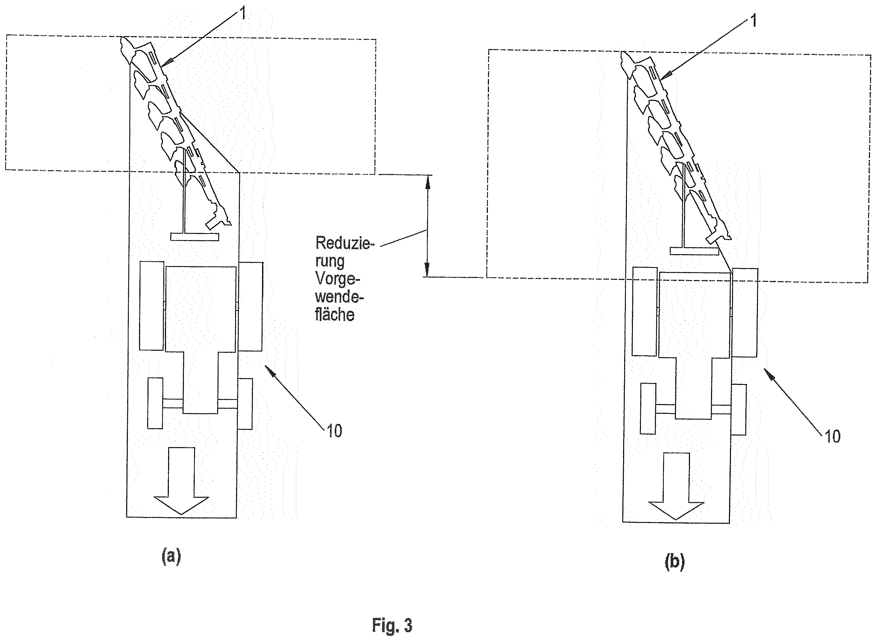

Wie ein Vergleich der Teilansichten (a) und (b) der Fig. 3 zeigt, kann die Tiefensteuervorrichtung 18 die Hubbewegungen an den Unterlenkern 11 und am Fahrwerk 25 auch gezielt versetzt zueinander ausführen, um am Vorgewende ein Eintauchen des Pflugs bzw. umgekehrt ein Ausheben des Pflugs mit möglichst geringer Vorgewendefläche zu erzielen. Hierzu kann die Tiefensteuervorrichtung 18 Anschnittsteuermittel 28 umfassen, die die Unterlenker- und Fahrwerkshöhenverstellmittel 16 und 17 derart ansteuern, dass die Hubbewegung an der Anbauvorrichtung 3 und die Hubbewegung am Fahrwerk 25 nacheinander erfolgen bzw. nacheinander begonnen werden. Bei solchermaßen zeitversetzten Hubvorgängen können die Hubvorgänge einander durchaus noch überlappen, beispielsweise der Hubvorgang am Fahrwerk 25 bereits begonnen werden, bevor der Hubvorgang an den Unterlenkern 11 abgeschlossen ist. Die Hubvorgänge können aber auch gänzlich zueinander versetzt sein derart, dass der Hubvorgang an den Unterlenkern 11 bereits abgeschlossen ist, bevor mit dem Hubvorgang am Fahrwerk 25 begonnen wird.

Die Anschnittsteuermittel 28 können hierbei in der eingangs beschriebenen Weise beispielsweise zeitgesteuert arbeiten und die Hubvorgänge beispielsweise um zumindest eine vorbestimmte Zeitspanne zueinander zu versetzen. Alternativ oder zusätzlich können die Anschnittsteuermittel 28 auch die zurückgelegte Wegstrecke berücksichtigen. Besitzt die Pflugscharreihe 30 in Fahrtrichtung betrachtet beispielsweise eine Länge von 5 m, können die Fahrwerkshöhenverstellmittel 17 den Pflugrahmen 2 beispielsweise absenken, sobald der Schlepper 10 und/oder der Pflug 1 vom Absenken der Unterlenker 11 an gerechnet etwa 5 m zurückgelegt hat, so dass die heckseitigen Pflugschare dort in den Boden eintauchen, wo auch die frontseitigen Pflugschare in den Boden eingetaucht sind.

Die genannte Ausführung der Hubvorgänge an den Unterlenkern 11 und dem Fahrwerk 25 versetzt zueinander können in umgekehrter Reihenfolge auch beim Ausheben des Pflugs 1 bei Erreichen des Vorgewendes ausgeführt werden.

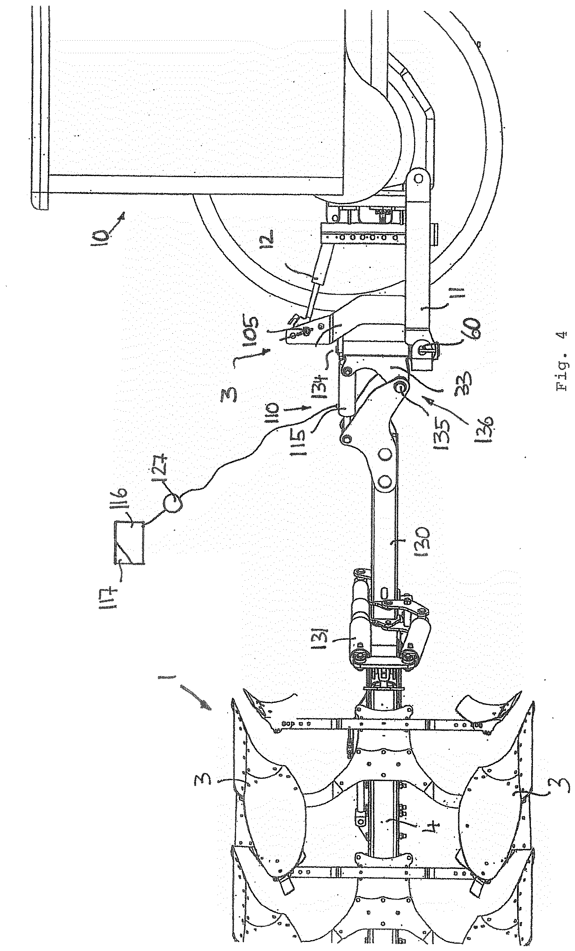

Eine weitere Steuerungsmaßnahme zum Reduzieren des Radschlupfs an den Schlepperrädern und/oder Pflugrädern verdeutlicht Fig. 4. Wie Fig. 4 zeigt, kann die Deichsel 130 des Bodenberbeitungsgeräts mittels einer Vorspannvorrichtung 110 an dem genannten Anlenkstück 133 und damit am Anbaubock 102 bezüglich der liegenden Wippachse 135 rotatorisch vorgespannt werden, wobei die Vorspannvorrichtung 110 wahlwesie die Deichsel 30 vom Boden weg nach oben drücken bzw. ziehen oder nach unten auf den Boden zu drücken bzw. ziehen kann, je nachdem, ob dem Schlepper oder dem Pflug- bzw. Bodenbearbeitungsrad mehr Traktion gegeben werden soll. Dabei kann die Vorspannvorrichtung 110 einen Druckmittelzylinder 115 umfassen, der einerseits an dem zuvor genannten Anlenkstück 133 und andererseits an der Deichsel 130 jeweils im Abstand von der liegenden Wippachse 135 angreift. In der gezeichneten Ausführung ist dabei der Druckmittelzylinder 115 oberhalb der Wippachse 135 angeordnet, so dass er in seine verkürzende Stellung vorgespannt ist, um die Deichsel 130 nach oben vorzuspannen, wobei jedoch auch eine umgekehrte Anordnung unterhalb der Deichsel 130 vorgesehen sein kann.

Durch den genannten Druckmittelzylinder 115 ist der Oberlenkeranlenkpunkt 5 des Pflugs 118 derart vorspannbar, dass im Pflugbetrieb eine vorbestimmte Zug- oder Druckkraft im Oberlenker 12 induziert werden kann, die das Heck des Pflugs 1 und das dort vorgesehene Stützrad 4 entlastet oder umgekehrt belastet und damit einhergehend - über die in den Unterlenkern wirkenden Gegenkräfte - am Schlepper 1 eine Reaktionskraft bewirkt, die die Antriebsräder des Schleppers 1 zusätzlich belastet oder entlastet.

Um den gewünschten Vorspanndruck im Druckmittelzylinder 15 bereit zu stellen, ist die entsprechende Druckmittelkammer des Druckmittelzylinders 15 mit einem Druckspeicher 27 verbindbar, der extern am Bodenbearbeitungsgerät 1 vorgesehen, jedoch vorteilhafterweise auch in den Druckmittelzylinder 15 integriert sein kann. Beispielsweise kann ein Membranspeicher vorgesehen sein. Um den Druck und damit die Traktionserhöhung steuern zu können, ist dem Druckspeicher 27 eine Drucksteuervorrichtung 28 zugeordnet, die beispielsweise einen Druckregler umfassen kann. Vorteilhafterweise kann der Druckspeicher 27 auch mit einer Hydraulikleitung an die Schlepperhydraulik angeschlossen werden, so dass vom Schlepper der vom Druckspeicher 27 zur Verfügung gestellte Druck verändert werden kann. Vorteilhafterweise kann vorgesehen sein, den Vorspanndruck dynamisch in Abhängigkeit des am Schlepper 10 oder am Bodenbearbeitungsgerät 1 auftretenden Schlupf gesteuert werden.

## Patentansprüche

1. Bodenbearbeitungsgerät, insbesondere Pflug, mit einer Anbauvorrichtung (3) zum Anbau an Unterlenker (11) eines Schleppers (10) sowie einem Fahrwerk (25) zum Abstützen des Bodenbearbeitungsgeräts am Boden, wobei eine Arbeitstiefe des Bodenbearbeitungsgeräts durch Fahrwerkshöhenverstellmittel (17) zum Höhenverstellen des Fahrwerks (25) und Unterlenkerhöhenverstellmittel (16) zum Höhenverstellen der Unterlenker (11) einstellbar ist, **dadurch gekennzeichnet, dass** Anschnittsteuermittel (28) zum automatischen Ansteuern der Unterlenker- und Fahrwerkshöhenverstellmittel (16, 17) in zueinander versetzter Weise vorgesehen und derart ausgebildet sind, dass beim Absenken des Bodenbearbeitungsgeräts aus der Vorgewendestellung in die Arbeitsstellung und/oder beim Ausheben des Bodenbearbeitungsgeräts aus der Arbeitsstellung in die Vorgewendestellung der Hubvorgang an den Unterlenkern (11) und der Hubvorgang am Fahrwerk (25) zeitversetzt zueinander begonnen und ausgeführt werden, so dass beim Absenken nach dem Vorgewende heckseitige Bodenbearbeitungswerkzeuge in einen Bodenbereich eintauchen, in den zuvor frontseitige Bodenbearbeitungswerkzeuge eingetaucht sind,' und/oder beim Ausheben am Vorgewende heckseitige Bodenbearbeitungswerkzeuge in einem Bodenbereich ausgehoben werden, in dem auch frontseitige Bodenbearbeitungswerkzeuge zuvor ausgehoben worden sind.

2. Bodenbearbeitungsgerät nach dem vorhergehenden Anspruch, wobei den Anschnittsteuermitteln (28) ein Zeitsignal und/oder ein Fahrstreckensignal und/oder ein Fahrgeschwindigkeitssignal bereitstellbar ist und die Ansteuermittel (28) derart ausgebildet sind, dass der Hubvorgang der Fahrwerkshöhenverstellmittel (17) nach Verstreichen einer vorbestimmten Zeitspanne und/oder nach Zurücklegen einer vorbestimmten Fahrstrecke ab Beginn oder Beendigung des Hubvorgangs der Unterlenkerhöhenverstellmittel (16) begonnen wird und/oder ausgeführt wird.

3. Bodenbearbeitungsgerät nach Anspruch 1, wobei eine Tiefensteuervorrichtung (18) zum automatischen Ansteuern der Fahrwerks- und Unterlenkerhöhenverstellmittel (17, 16) in Abhängigkeit eines Radschlupfs und/oder eines vom Schlepper (10) auf das Bodenbearbeitungsgerät (1) ausgeübten Zugkraft vorgesehen und derart ausgebildet ist, dass bei Überschreiten eines Schwellenwerts für den Radschlupf und/oder die Zugkraft die Arbeitstiefe durch gemeinsames Verstellen der Unterlenker- und Fahrwerkshöhenverstellmittel (16) gleichmäßig für Front- und Heckabschnitte des Bodenbearbeitungsgeräts verringert wird.

4. Bodenbearbeitungsgerät nach dem vorhergehenden Anspruch, wobei der Tiefensteuervorrichtung (18) von einer Schlepperradschlupf-Bestimmungseinrichtung ein Schlepperradschlupf-Signal bereitstellbar ist und die Tiefensteuervorrichtung (18) zum automatischen Ansteuern der Fahrwerks- und Unterlenkerhöhenverstellmittel (17, 16) in Abhängigkeit des genannten Schlepperradschlupfsignals ausgebildet ist.

5. Bodenbearbeitungsgerät nach einem der vorhergehenden Ansprüche, wobei der Tiefensteuerungsvorrichtung (18) von einer Anbaugeräteradschlupf-Bestimmungseinrichtung (24) ein Anbaugeräteradschlupf-Signal bereitstellbar ist und die Tiefensteuervorrichtung (18) zum automatischen Ansteuern der Unterlenker- und Fahrwerkshöhenverstellmittel (16, 17) in Abhängigkeit des Anbaugeräteradschlupfsignals ausgebildet ist.

6. Bodenbearbeitungsgerät nach einem der vorhergehenden Ansprüche, wobei der Tiefensteuervorrichtung (18) von einer Zugkraft-Bestimmungseinrichtung (21) ein Zugkraft-Signal bereitstellbar ist und die Tiefensteuervorrichtung (18) zum automatischen Ansteuern der Unterlenker- und Fahrwerkshöhenverstellmittel (16, 17) in Abhängigkeit des Zugkraftsignals ausgebildet ist.

7. Bodenbearbeitungsgerät nach einem der vorhergehenden Ansprüche, wobei die Tiefensteuervorrichtung (18) einen ersten Betriebsmodus aufweist, in dem die Unterlenkerhöhenverstellmittel (16) und die Fahrwerkshöhenverstellmittel (17) synchron zueinander verstellbar sind, und einen zweiten Betriebsmodus aufweist, in dem die Unterlenkerhöhenverstellmittel (16) und die Fahrwerkshöhenverstellmittel (17) zueinander versetzt verstellbar sind.

8. Bodenbearbeitungsgerät nach einem der vorhergehenden Ansprüche, wobei die Tiefensteuervorrichtung (18) und/oder die Anschnittsteuermittel (28) von einem Jobrechner (26) des Bodenbearbeitungsgeräts gebildet sind, der über eine Signalverbindung Zugriff auf die schlepperseitigen Unterlenkerhöhenverstellmittel (16) zum Höhenverstellen der Unterlenker (11) des Schleppers (10) besitzt, wobei die genannte Signalverbindung eine BUS-Verbindung, insbesondere ISOBUS-Verbindung, umfasst, über die dem Jobrechner (26) des Bodenbearbeitungsgeräts vom Schlepper (10) her ein Radschlupfsignal und/oder ein Zugkraftsignal und/oder ein Unterlenker-Höhensignal bereitstellbar ist und den Unterlenkerhöhenverstellmitteln (16) vom Bodenbearbeitungsgerät her ein Höhenstellsignal bereitstellbar ist.

9. Bodenbearbeitungsgerät nach einem der vorhergehenden Ansprüche, wobei eine Radantriebs-Steuervorrichtung (15) zum Steuern des Drehmoments und der Drehzahl des Radantriebs (13) in Abhängigkeit einer vom Schlepper (10) in die Anbauvorrichtung (3) induzierten Zugkraft und eines Radschlupfs des Pflugrads (4) vorgesehen ist, wobei die Radantriebs-Steuervorrichtung (15) einen Drehmomentregler (19) zum Regeln des Radantriebsdrehmoments derart, dass die Zugkraft in der Anbauvorrichtung (3) minimal wird, und einen Drehzahlregler (23) zum Regeln der Radantriebsdrehzahl derart, dass der Pflugradschlupf minimal wird, aufweist.

10. Bodenbearbeitungsgerät nach dem vorhergehenden Anspruch, wobei der Drehmomentregler (19) derart ausgebildet ist, dass das Radantriebsdrehmoment dann begrenzt wird, wenn die Zugkraft in der Anbauvorrichtung (3) in Fahrtrichtung (20) Null oder negativ wird.

11. Bodenbearbeitungsgerät nach einem der beiden vorhergehenden Ansprüche, wobei der Drehmomentregler einen Zugkraft-Signaleingang für ein Zugkraftsignal eines der Anbauvorrichtung (3) zugeordneten Kraftsensors aufweist und das Drehmoment des Radantriebs (13) in Abhängigkeit des genannten Kraftsignals steuert.

12. Bodenbearbeitungsgerät nach einem der vorgehenden Ansprüche, wobei der Drehzahlregler (23) einen Fahrgeschwindigkeits-Signaleingang für ein Fahrgeschwindigkeitssignal eines Fahrgeschwindigkeitssensors und einen Radumfangsgeschwindigkeits-Signaleingang für ein Radumpfangsgeschwindigkeitssignal, dass die Radumfangsgeschwindigkeit des Pflugrads (4) angibt, aufweist und Steuermittel zum Begrenzen der Drehzahl des Radantriebs (13) dann, wenn die ermittelte Radumfangsgeschwindigkeit die Fahrgeschwindigkeit übersteigt, umfasst.

13. Bodenbearbeitungsgerät nach einem der vorhergehenden Ansprüche, wobei eine Vorspannvorrichtung (110) zum elastischen Vorspannen eines Geräterahmens (4) des Bodenbearbeitungsgeräts gegenüber dem Schlepper (10) um einen liegende Querachse (135) vorgesehen ist, wobei die Vorspannvorrichtung (110) derart angeordnet und ausgebildet ist, dass die von der Vorspannvorrichtung (110) bereitgestellte Vorspannkraft entweder den Geräterahmen (4) entgegen seiner Gewichtskraft entlastet und den Oberlenker (12) des Schleppers (10) mit einer Zugkraft beaufschlagt oder den Geräterahmen (4) zusätzlich zu seiner Gewichtskraft belastet und den Oberlenker (12) des Schleppers (10) mit einer Druckkraft beaufschlagt, wobei die Vorspannvorrichtung (110) ein fremdenergiebetätigbares Stellglied umfasst und von einer Steuervorrichtung automatisch in Abhängigkeit des Radschlupfs und/oder der Zugkraft des Schleppers auf das Bodenbearbeitungsgerät ansteuerbar ist.

14. Bodenbearbeitungsgerät nach dem vorhergehenden Anspruch, wobei der Steuervorrichtung von einer Schlepperradschlupf-Bestimmungseinrichtung ein Schlepperradschlupfsignal bereitstellbar und von einer Anbaugeräteradschlupf-Bestimmungseinrichtung ein Anbaugeräteradschlupfsignal bereitstellbar ist, wobei die Steuervorrichtung derart ausgebildet ist, dass im Oberlenker (12) eine Zugkraft erzeugt wird, wenn das Schlepperradschupfsignal einen Schwellenwert überschreitet und/oder der Schlepperradschlupf ein vorbestimmtes Maß im Verhältnis zum Anbaugeräteradschlupf übersteigt, und/oder im Oberlenker (12) eine Druckkraft erzeugt wird, wenn das Anbaugeräteradschlupfsignal einen Schwellenwert überschreitet und/oder der Anbaugeräteradschlupf ein vorbestimmtes Maß im Verhältnis zum Schlepperradschlupf überschreitet.

## Claims

1. Soil processing device, in particular plow, with an attachment device for attachment to a lower link (11) of a tractor (10), as well as a chassis (25) for supporting the soil processing device on the ground, wherein a working depth of the soil processing device can be set by chassis height adjustment means (17) for the height adjustment of the chassis (25) and lower link height adjustment means (16) for the height adjustment of the lower links (11), **characterized in that** cutting control means (28) for automatically actuating the lower link and chassis height adjustment means (16, 17) are provided in a way offset to each other and are configured in such a manner that, in the lowering of the soil processing device from the headland position into the operating position and/or in the lifting of the soil processing device out of the operating position into the headland position, the lifting process at the lower links (11) and the lifting process at the chassis (25) are started and performed temporally offset to one another so that, upon lowering, after the headland, rear-sided soil processing tools dive into a soil area, in which previously the front-sided soil processing toils dived into; and/or, upon lifting, on the headland, rear-sided soil processing tools are lifted out in a soil area, in which front-sided soil processing tools also have previously been lifted out of.

2. Soil processing device according to the preceding claim, wherein a temporal signal and/or a route signal and/or a driving speed signal can be provided to the cutting control means (28), and the actuation means (28) are configured in such a manner that, after the elapsing of a predetermined period of time and/or after traveling a predetermined travel distance from the beginning or ending of the lifting process of the lower link height adjustment means (16), the lifting process of the chassis height adjustment means (17) will start and/or will be carried out.

3. Soil processing device according to claim 1, wherein a depth control device (18) is provided for the automatic actuating of the chassis and lower link height adjusting means (17, 16), depending on a wheel slippage and/or a tractive force exerted by the tractor (10) on the soil processing device (1), and configured in such a manner that, in an exceeding of a threshold value for the wheel slippage and/or the tractive force, the working depth is decreased equally for front and rear sections of the soil processing device by common adjustment of the lower link and chassis height adjustment means (16).

4. Soil processing device according to the preceding claim, wherein a tractor wheel slippage signal can be provided by a tractor wheel slippage determining means to the depth control device (18), and the depth control device (18) is configured for the automatic actuation of the chassis and lower link height adjustment means (17, 16) depending upon the mentioned tractor wheel slippage signal.

5. Soil processing device according to one of the preceding claims, wherein an attachment device wheel slippage signal can be provided by an attachment device wheel slippage determining device (24) to the depth control device (18), and the depth control device (18) is configured for the automatic actuating of the lower link and chassis height adjustment means (16, 17) depending on the attachment device wheel slippage signal.

6. Soil processing device according to one of the preceding claims, wherein a tractive force signal can be provided by a tractive force determining device (21) to the depth control device (18), and the depth control device (18) is configured for automatically actuating the lower link and chassis height adjustment means (16, 17) depending on the tractive force signal.

7. Soil processing device according to one of the preceding claims, wherein the depth control device (18) has a first operating mode, in which the lower link height adjustment means (16) and the chassis height adjustment means (17) can be adjusted synchronously to one another and has a second operating mode, in which the lower link height adjustment means (16) and the chassis height adjustment means (17) can be adjusted offset to one another.

8. Soil processing device according to one of the preceding claims, wherein the depth control device (18) and/or the cutting control means (28) are configured by a job computer (26) of the soil processing device, which has access to tractor-sided lower link height adjustment means (16), via a signal connection, for the height adjustment of the lower links (11) of the tractor (10), wherein the mentioned signal connection includes a BUS connection, in particular an ISOBUS connection, via which a wheel slippage signal and/or a tractive force signal and/or a lower link height signal can be provided to the job computer (26) of the soil processing device from the tractor (10), and a height adjustment signal can be provided to the lower link height adjustment means (16) from the soil processing device.

9. Soil processing device according to one of the preceding claims, wherein a wheel drive control device (15) is provided to control the torque and the speed of the wheel drive (13) depending on a tractive force induced by the tractor (10) in the attachment device (3) and a wheel slippage of the plow wheel (4), wherein the wheel drive control device (15) comprises a torque regulator for regulating the wheel drive torque in such a manner that the tractive force in the attachment device (3) becomes minimal, and comprises a speed regulator (23) for regulating the wheel drive speed in such a manner that the plow wheel slippage becomes minimal.

10. Soil processing device according to one of the preceding claims, wherein the torque regulator (19) is configured in such a manner that the wheel drive torque is limited in the event that the tractive force in the attachment device (3), in the direction of travel (20), becomes zero or negative.

11. Soil processing device according to one of the two preceding claims, wherein the torque regulator comprises a tractive force signal input for a tractive force signal from a force sensor assigned to the attachment device (3) and controls the torque of the wheel drive (13) depending on the mentioned force signal.

12. Soil processing device according to one of the preceding claims, wherein the speed regulator (23) comprises a traveling speed signal input for a traveling speed signal of a traveling speed sensor and a wheel circumferential speed signal input for a wheel circumferential speed signal, which indicates the wheel circumferential speed of the plow wheel (4) and includes control means for limiting the speed of the wheel drive (13) when the determined wheel circumferential speed exceeds the traveling speed.

13. Soil processing device according to one of the preceding claims, wherein a pre-tensioning device (110) is provided for the elastic pre-tensioning of a device frame (4) of the soil processing device relative to the tractor (10) about a horizontal transverse axis (135), wherein the pre-tensioning device (110) is arranged and configured in such a manner that the pre-tensioning force provided by the pre-tensioning device (110) either unburdens the device frame (12) against its weight force and applies the upper link (12) of the tractor (10) with a tractive force, or loads the device frame (4) in addition to its weight force and applies a pressure force to the upper link (12) of the tractor (10), wherein the pre-tensioning device (110) includes an actuator that is activatable by external energy and is automatically actuatable by a control device depending on the wheel slippage and/or the tractive force of the tractor on the soil processing device.

14. Soil processing device according to one of the preceding claims, wherein a tractor wheel slippage signal can be provided by a tractor wheel slippage determining device, and an attachment device wheel slippage signal can be provided by attachment device wheel slippage determining device to the control device, wherein the control device is configured in such a manner that a tractive force is generated in the upper link (12) if the tractor wheel slippage signal exceeds a threshold value and/or if the tractor wheel slippage rises above a pre-determined extent in relation to the attachment device slippage, and/or a pressure force is generated in the upper link (12) if the attachment device wheel slippage signal exceeds a threshold value and/or the attachment device wheel slippage exceeds a pre-determined extent in relation to the tractor wheel slippage.

## Revendications

1. Appareil de travail du sol, en particulier charrue, comprenant un dispositif d'attelage (3) destiné à être monté sur des bras inférieurs (11) d'un tracteur (10) ainsi qu'un mécanisme de déplacement (25) destiné au support de l'appareil de travail du sol sur le sol, une profondeur de travail de l'appareil de travail du sol étant réglable par des moyens de réglage en hauteur de mécanisme de déplacement (17) pour le réglage en hauteur du mécanisme de déplacement (25) et des moyens de réglage en hauteur de bras inférieur (16) pour le réglage en hauteur des bras inférieurs (11), **caractérisé en ce que** des moyens de commande de coupe (28) sont prévus pour la commande automatique des moyens de réglage en hauteur de bras inférieur et de mécanisme de déplacement (16, 17) de manière décalée les uns par rapport aux autres et sont conçus de telle manière que, lors de la descente de l'appareil de travail du sol de la position de tournière à la position de travail et/ou lors du levage de l'appareil de travail du sol de la position de travail à la position de tournière, le processus de levage des bras inférieurs (11) et le processus de levage du mécanisme de déplacement (25) sont amorcés de manière décalée dans le temps l'un par rapport à l'autre et exécutés de telle sorte que, lors de la descente après la tournière, des outils de travail du sol arrière s'enfoncent dans une zone de sol, dans laquelle des outils de travail du sol avant se sont auparavant enfoncés, et/ou lors du levage à la tournière, des outils de travail du sol arrière sont relevés dans une zone de sol, dans laquelle des outils de travail du sol avant ont également été relevés auparavant.

2. Appareil de travail du sol selon la revendication précédente, dans lequel un signal relatif au temps et/ou un signal relatif au trajet et/ou un signal relatif à la vitesse de marche peut être fourni aux moyens de commande de coupe (28) et les moyens de commande (28) sont conçus de telle manière que le processus de levage des moyens de réglage en hauteur de mécanisme de déplacement (17) est amorcé et/ou exécuté après qu'un intervalle de temps prédéfini s'est écoulé et/ou qu'un trajet prédéfini a été parcouru depuis le début ou la fin du processus de levage des moyens de réglage en hauteur de bras inférieur (16).

3. Appareil de travail du sol selon la revendication 1, dans lequel un dispositif de commande de profondeur (18) est prévu pour la commande automatique des moyens de réglage en hauteur de mécanisme de déplacement et de bras inférieur (17, 16) en fonction d'un patinage de roue et/ou d'une force de traction exercée par le tracteur (10) sur l'appareil de travail du sol (1) et est conçu de telle manière que, lors d'un dépassement d'une valeur seuil pour le patinage de roue et/ou la force de traction, la profondeur de travail est diminuée de manière homogène pour les sections avant et arrière de l'appareil de travail du sol par le réglage commun des moyens de réglage en hauteur de bras inférieur et de mécanisme de déplacement (16).

4. Appareil de travail du sol selon la revendication précédente, dans lequel un signal relatif au patinage de roue de tracteur peut être fourni au dispositif de commande de profondeur (18) par un moyen de détermination de patinage de roue de tracteur et le dispositif de commande de profondeur (18) est conçu pour la commande automatique des moyens de réglage en hauteur de mécanisme de déplacement et de bras inférieur (17, 16) en fonction dudit signal relatif au patinage de roue de tracteur.

5. Appareil de travail du sol selon l'une des revendications précédentes, dans lequel un signal relatif au patinage de roue d'outil porté peut être fourni au dispositif de commande de profondeur (18) par un moyen de détermination de patinage de roue d'outil porté (24) et le dispositif de commande de profondeur (18) est conçu pour la commande automatique des moyens de réglage en hauteur de bras inférieur et de mécanisme de déplacement (16, 17) en fonction dudit signal relatif au patinage de roue d'outil porté.

6. Appareil de travail du sol selon l'une des revendications précédentes, dans lequel un signal relatif à la force de traction peut être fourni au dispositif de commande de profondeur (18) par un moyen de détermination de force de traction (21) et le dispositif de commande de profondeur (18) est conçu pour la commande automatique des moyens de réglage en hauteur de bras inférieur et de mécanisme de déplacement (16, 17) en fonction du signal relatif à la force de traction.

7. Appareil de travail du sol selon l'une des revendications précédentes, dans lequel le dispositif de commande de profondeur (18) comporte un premier mode de fonctionnement, dans lequel les moyens de réglage en hauteur de bras inférieur (16) et les moyens de réglage en hauteur de mécanisme de déplacement (17) sont réglables de manière synchrone les uns par rapport aux autres, et un second mode de fonctionnement, dans lequel les moyens de réglage en hauteur de bras inférieur (16) et les moyens de réglage en hauteur de mécanisme de déplacement (17) sont réglables de manière décalée les uns par rapport aux autres.

8. Appareil de travail du sol selon l'une des revendications précédentes, dans lequel le dispositif de commande de profondeur (18) et/ou les moyens de commande de coupe (28) sont formés par un ordinateur de tâches (26) de l'appareil de travail du sol, qui a accès aux moyens de réglage en hauteur de bras inférieur (16) côté tracteur pour le réglage en hauteur des bras inférieurs (11) du tracteur (10) par le biais d'une liaison de transmission de signaux, ladite liaison de transmission de signaux comprenant une liaison par bus, en particulier une liaison par ISOBUS, par le biais de laquelle un signal de patinage de roue et/ou un signal de force de traction et/ou un signal de hauteur de bras inférieur peut être fourni à l'ordinateur de tâches (26) de l'appareil de travail du sol depuis le tracteur (10) et un signal de réglage en hauteur peut être fourni aux moyens de réglage en hauteur de bras inférieur (16) depuis l'appareil de travail du sol.

9. Appareil de travail du sol selon l'une des revendications précédentes, dans lequel un dispositif de commande d'entraînement de roue (15) est prévu pour commander le couple et la vitesse de rotation de l'entraînement de roue (13) en fonction d'une force de traction induite par le tracteur (10) dans le dispositif d'attelage (3) et d'un patinage de roue de la roue de charrue (4), le dispositif de commande d'entraînement de roue (15) comportant un régulateur de couple (19) destiné à réguler le couple de l'entraînement de roue de telle manière que la force de traction dans le dispositif d'attelage (3) devient minimale, et un régulateur de vitesse de rotation (23) destiné à réguler la vitesse de rotation de l'entraînement de roue de telle manière que le patinage de la roue de charrue devient minimal.

10. Appareil de travail du sol selon la revendication précédente, dans lequel le régulateur de couple (19) est conçu de telle manière que le couple d'entraînement de roue est limité quand la force de traction dans le dispositif d'attelage (3) devient nulle ou négative dans le sens de la marche (20).

11. Appareil de travail du sol selon l'une des deux revendications précédentes, dans lequel le régulateur de couple comporte une entrée de signal de force de traction pour un signal de force de traction d'un capteur de force assigné au dispositif d'attelage (3) et commande le couple de l'entraînement de roue (13) en fonction dudit signal de force.

12. Appareil de travail du sol selon l'une des revendications précédentes, dans lequel le régulateur de vitesse (23) comporte une entrée de signal de vitesse de marche pour un signal de vitesse de marche d'un capteur de vitesse de marche et une entrée de signal de vitesse périphérique de roue pour un signal de vitesse périphérique de roue, qui indique la vitesse périphérique de roue de la roue de charrue (4), et comprend des moyens de commande destinés à limiter la vitesse de rotation de l'entraînement de roue (13) quand la vitesse périphérique de roue détectée dépasse la vitesse de marche.

13. Appareil de travail du sol selon l'une des revendications précédentes, dans lequel un dispositif de précontrainte (110) est prévu pour la précontrainte élastique d'un bâti d'appareil (4) de l'appareil de travail du sol par rapport au tracteur (10) sur un axe transversal (135) horizontal, le dispositif de précontrainte (110) étant disposé et conçu de telle manière que la force de précontrainte fournie par le dispositif de précontrainte (110) décharge le bâti d'appareil (4) contrairement à son poids et soumet le bras supérieur (12) du tracteur (10) à une force de traction ou applique une charge sur le bâti d'appareil (4) en plus de son poids et soumet le bras supérieur (12) du tracteur (10) à une force de pression, le dispositif de précontrainte (110) comprenant un actionneur, qui peut fonctionner au moyen d'une source d'énergie externe, et pouvant être commandé automatiquement par un dispositif de commande en fonction du patinage de roue et/ou de la force de traction du tracteur sur l'appareil de travail du sol.

14. Appareil de travail du sol selon la revendication précédente, dans lequel un signal de patinage de roue de tracteur peut être fourni au dispositif de commande par un moyen de détermination de patinage de roue de tracteur et un signal de patinage de roue d'outil porté par un moyen de détermination de patinage de roue d'outil porté, le dispositif de commande étant conçu de telle manière qu'une force de traction est générée dans le bras supérieur (12), quand le signal de patinage de roue de tracteur dépasse une valeur seuil et/ou le patinage de roue de tracteur excède une grandeur prédéfinie par rapport au patinage de roue d'outil porté, et/ou une force de pression est générée dans le bras supérieur (12) quand le signal de patinage de roue d'outil porté dépasse une valeur seuil et/ou le patinage de roue d'outil porté dépasse une grandeur prédéfinie par rapport au patinage de roue de tracteur.
